Europäisches Patentamt

European Patent Office

Office européen des brevets

(11) Publication number: **0 196 840**

**A2**

(12) # EUROPEAN PATENT APPLICATION

(21) Application number: **86302110.1**

(22) Date of filing: **21.03.86**

(51) Int. Cl.⁴: **A 01 D 85/00**

(30) Priority: **29.03.85 GB 8508202**

(43) Date of publication of application:
**08.10.86 Bulletin 86/41**

(84) Designated Contracting States:
**BE DE FR IT NL**

(71) Applicant: **Saunders, Patrick George
Step Farm
Faringdon Oxfordshire(GB)**

(72) Inventor: **Saunders, Patrick George
Step Farm
Faringdon Oxfordshire(GB)**

(74) Representative: **Armitage, Ian Michael et al,
MEWBURN ELLIS & CO. 2/3 Cursitor Street
London EC4A 1BQ(GB)**

(54) **Improvements in bale accumulators.**

(57) A bale accumulator 10 is provided with a bale discharge device 112 at its inlet to receive bales from the discharge end of a baler. The discharge device has a longitudinal passage in which bales moving along the passage are retained until a bale pushes against the rear gate 162 to allow hinged side wall sections 116 to swing outwardly and drop the bale to the ground in front of the forward diverter gate of the accumulator. The discharge device thus helps to prevent the inlet of the bale accumulator from becoming blocked when a dense amount of material is being baled by bringing a bale into the accumulator over an existing bale.

FIG.1

Croydon Printing Company Ltd

Ð196840

# IMPROVEMENTS IN BALE ACCUMULATORS

This invention relates to bale accumulators; that is to say apparatus designed to be towed behind an agricultural baler for collecting and arranging the bales discharged from the baler into suitable groups before depositing them in the field.

Various bale accumulators are known, and in particular may be mentioned those described in GB 1349747, GB 1461833 and GB 2097326. These accumulators work on the principle of a forward diverter gate which directs the incoming bales into one lateral half or the other of the accumulator frame, and a pair of rear diverter gates which further divert the bales in each half into different locations. Occasionally the bales may be discharged from the baler faster than the accumulator can handle them, for example if an unusually dense region of hay is encountered and the accumulator has to move forward more slowly. This can cause jamming of the bales at the inlet.

The present invention provides improvements which alleviate this problem.

According to the present invention there is provided a bale accumulator in which bales are received at the front and discharged at the rear, and in between are directed by diverter gates into different locations in the accumulator, until a complete set of bales is built up across the accumulator whereupon the set is released rearwards; characterised in that the inlet to the accumulator is connected to a bale discharge device for attachment to the discharge end of a baler, the discharge device having a substantially horizontal passage to receive a succession of bales moving lengthwise from the discharge end of the baler, means for supporting the bales within the passage while allowing them to pass along the passage, said supporting means being displaceable to allow a bale within the passage to fall therefrom to the ground below in front of the foremost diverter gate.

According to another aspect of the present invention there is provided a bale accumulator in which bales are received at the front and discharged at the rear, and in between are directed, initially by forward diverter gates to one side or the other of the accumulator, and then by rear diverter gates into different locations in the respective sides of the accumulator, until a complete set of bales is built up across the accumulator whereupon the set is released rearwards by the bale which completes the set acting on a first mechanism, the forward diverter gate being moved between alternate diverter positions, a first position being adopted initially while the bales are diverted thereby to one side of the accumulator, the last bale entering that side acting on a second mechanism to move the forward diverter gate to its second position in which the bales are diverted to the other side of the accumulator, the gate returning to its first position when the set of bales is complete; characterised in that a third mechanism is provided arranged to be actuated by the completed set of bales to return the forward diverter gate to its first position in advance of release of said second mechanism from engagement with the bales.

In order that the invention may be more clearly understood, one embodiment will now be described with reference to the accompanying drawings, wherein:

Fig. 1 shows a plan view of a bale accumulator,

Fig. 2 shows a side view of the accumulator,

Fig. 3 shows diagrammatically the forward diverter gate operating mechanism, and

Fig. 4 shows a perspective view of the bale discharge device at the inlet end of the accumulator.

Referring to the drawings; the accumulator is in many respects similar to that shown in GB 2097326, to which reference may be made for a more detailed description of its operation. The accumulator comprises a steel frame 10 having an inlet end 12 to receive incoming bales from the baler. The frame is generally open at the bottom so that as the accumulator moves forward the bales are urged relatively rearwards by ground friction. An inlet box 16, open at the front and the rear, is pivotally connected about a vertical axis 18 and horizontal axis 17 to the front of the frame, and is adapted for pivotal connection about a vertical axis 19 and horizontal axis 21 to the discharge end of the baler. The pivot axes thus provide an articulated linkage between

0196840

the baler and the accumulator, particularly to facilitate entry of bales into the accumulator while turning corners and when passing over uneven ground. The accumulator as a whole is preferably supported on ground wheels 20,22, the forward wheel 20 being a castor wheel.

A forward diverter gate 24 is pivoted at 26 so as to be movable between two alternative positions as shown, so that it can thereby divert incoming bales into one or the other lateral half of the frame. Behind the front diverter gale each lateral half of the frame is provided with a respective rear diverter gate 28 pivoted at 30 so as to be movable between alternative positions in which it directs bales arriving via the forward diverter gate into either of two positions. The four positions are indicated by the bales 32A. The bales are initially arrested in these positions by a transverse abutment gate 34 which is hinged at its upper edge 36 to the frame so that it can depend vertically to provide rear support for the bales 32A, or can hinge rearwardly (as shown in Fig. 2) to allow the bales to pass into a rear portion of the frame. In the rear portion of the frame, the bales are initially arrested by a tail-gate 38 which is hinged at its top edge 40 to the rear of the frame. The bales in the rear portion of the frame are indicated at 32B, and it will be observed that they have been drawn more closely together by means of a wedge-shaped cam elements 41 on the frame.

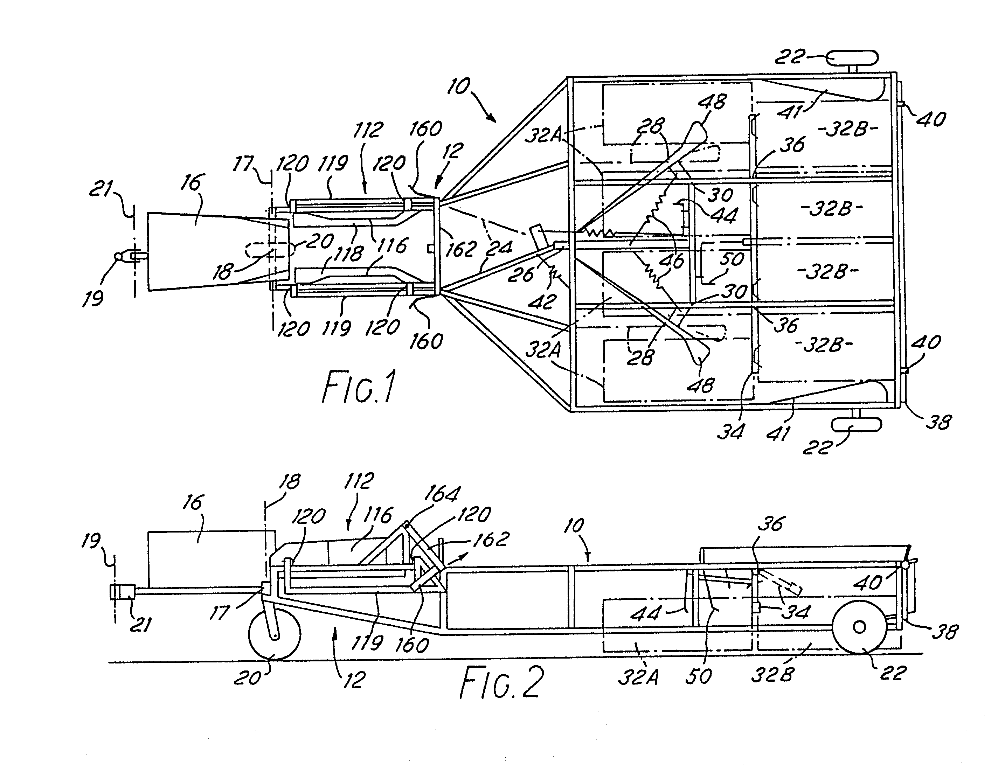

The forward diverter gate 24 is urged in one direction (solid lines in Fig. 1 and Fig. 3) by a spring 42, and is moved over into the other position (dot-dash lines) when a depending lever 44 is deflected by the second bale entering the right-hand half of the frame. Thereafter the next two bales will enter the left-hand side of the frame. The rear diverter gates are initially urged into the central position (solid lines in Fig. 1) by springs 46, but have wedge-shaped rear cam surfaces 48 which are acted upon by bales entering the outermost positions so as to move the rear diverter gates into their alternative positions (dot-dash lines in Fig. 1) so that the next bales enter the inner positions. The last bale to make up the four (the inner position in the left-hand half of the frame) bears upon a depending lever 50 to release the abutment gate 34 so that the set of four bales can move to the rear portion of the frame. In that position, where they are held by the tail-gate 38, the abutment gate 34 is maintained in a somewhat raised condition by resting on the tops of the bales, as can be seen in Fig. 2. The length of this rearmost portion of the frame is substantially the same as that of the bales, so that the forward ends of the bales 32B in the rearmost portion now take the place of the abutment gate 34 in providing a rear abutment for the next set of four bales which are formed by the diverter gates. The next time the lever 50 is lifted on completion of the set of four bales in the forward portion of the frame, a mechanism releases the tail-gate 38 to allow the complete set of eight bales to be discharged rearwardly

DÎ96840

6

from the accumulator. Further details of the operation of the linkage for controlling the abutment gate 34 and tail-gate 38 are given in GB 2097326.

Fig. 3 shows in more detail the linkage which controls the forward diverter gate 24. The depending lever 44 is fast with one end of a transverse axle 45 which is journalled to the accumulator frame. The other end of the axle carries a short depending arm 47 whose lower end has a horizontally projecting pin 49. A rod 51 is pivotally connected at one end to a crank 53 projecting sideways from the diverter gate 24, and extends rearwardly over the pin 49 which is engaged by a depending barb 55 on the rod 51. Thus, as the lever 44 is swung rearwardly by the second bale to enter that half of the frame, the movement will be followed by the arm 47, and the pin 49 bearing upon the barb 55 will move the rod 51 rearwards, as shown in dot-dash lines, and thus swing the diverter gate 24 to its alternative position, shown in dot-dash lines.

The other depending lever 50 which operates the abutment gate 34 via an arm 52, and the rear tail-gate 38 via an arm 58 (as described in more detail in GB 2097326), is fast with one end of a transverse axle 57 journalled to the accumulator frame. The other end of the axle carries an arm 59 which is generally horizontal when the lever 50 is vertical. The arm 59 is pivotally connected to the rod 51 by means of a depending link 61, which can be rigid, or could be a wire or chain. In the initial position of the diverter gate 24, the link 61 is angled forwardly from the arm 59 to the rod 51, whereas in the alternative position of the diverter gate 24 the rearward movement of the rod 51 places the link 61 in a similarly angled rearward inclination from the arm 59. By this means, the rod rests on the pin 49, and the barb 55 engages over the pin 49, throughout the rearward travel of the rod 51. However, when the second bale enters the left-hand side of the accumulator frame and swings the lever 50 rearwards to release the abutment gate 34 or tail-gate 38, it also causes the arm 59 to swing upwards, lifting the end of the rod 51 and disengaging the barb 55 from the pin 49. The arm can thus swing forwards (again owing to the arrangement of the link 61), allowing the forward diverter gate 24 to return immediately to its original position, without having to wait until the forward movement of the accumulator carries the bales clear of the lever 44. When the lever 44 is released from engagement with the bales, it swings to its depending position once more, and the pin 49 can slide over the ramp shaped surface of the barb 55 and engage the barb once more as shown in Fig. 3.

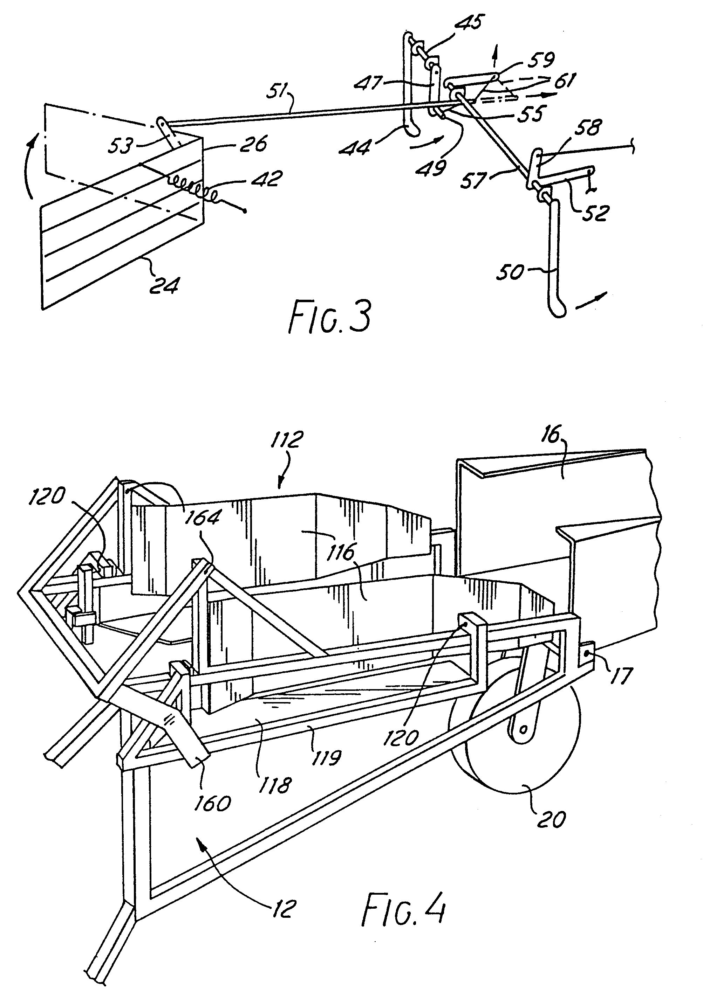

The accumulator is also shown as incorporating another feature which helps to keep the accumulator operating correctly under conditions where the forward movement of the accumulator is periodically checked or slowed. This is a bale dropper device 112 mounted in the inlet of the accumulator so as to receive bales from the inlet box 16 and drop them to the ground in front of the forward diverter gate 24. The dropper is shown more particularly in Fig. 4, and is a modification of a device described in GB 2066728.

The dropper comprises fixed opposite side walls 166 defining a longitudinal passage, and a pair of bottom flanges 118 mutually inwardly directed from respective side frame members 119 which are pivoted to the frame 10 about forwardly extending axis 120. Thus, a bale entering the dropper passage will normally be supported on these flanges 118.

The hinged frame side members 119 are normally restrained by arms 160 which extend alongside the outside surfaces of the side frame members 119 and are fast with a rear gate 162 which is hinged at 164 for swinging rearwardly and upwardly when it is engaged by the rearwardly moving bale in the passage. This movement causes the arms 160 to move rearwardly slidingly alongside the hinged side frame members 119, but are curved outwardly to allow the members 119 to hinge outwardly to a degree sufficient to release the bale from the passage, and after the bale has dropped, the hinged side frame members 119 return to their former position and the gate 162 does likewise.

The fixed side walls 116 of the dropper passage are shaped so as to be somewhat wider at the forward end than at the central region. This is to allow a degree of pivoting between the inlet box 16 and the dropper, while confining the bale reasonably closely in the central region of the passage.

The effect of the dropper mechanism is to allow the incoming bales to overlap each other in front of the forward diverter gate, in that if the forward movement of the accumulator is temporarily slowed or checked, a bale dropped from the dropper can remain underneath it while the next bale enters the dropper passage over the dropped bale. This therefore enables the accumulator to handle much greater variations in density of material being baled than is possible with conventional accumulators.

Both the dropper and the mechanism which permits the early return of the forward diverter gate are useful in improving the operational flexibility of the accumulator, but although they are both illustrated on a single accumulator, an accumulator could still with advantage incorporate one or other of these features rather than both of them.

0196840

CLAIMS

1.    A bale accumulator in which bales are received at the front and discharged at the rear, and in between are directed by diverter gates (24,28) into different locations in the accumulator, until a complete set of bales is built up across the accumulator whereupon the set is released rearwards; characterised in that the inlet (12) to the accumulator is connected to a bale discharge device (112) for attachment to the discharge end of a baler, the discharge device (112) having a substantially horizontal passage to receive a succession of bales moving lengthwise from the discharge end of the baler, means (118) for supporting the bales within the passage while allowing them to pass along the passage, said supporting means (118) being displaceable to allow a bale within the passage to fall therefrom to the ground below in front of the foremost diverter gate (24).

2.    A bale accumulator according to claim 1 wherein said passage is wider at the bale receiving inlet end than at the opposite end (12) proximate the foremost diverter gate (24).

3.    A bale accumulator according to claim 1 or claim 2 wherein the support means (118) within the passage are mutually inwardly directed flanges (118) projecting from the bottom of respective side walls (116) of the passage and extending lengthwise thereof.

4.    A bale accumulator according to any one of the preceding claims wherein the height of the support means (118) above the ground is such that it enables a bale of substantially the same height at the passage to remain underneath the support means (118) while the next bale enters the passage over the dropped bale.

5.    A bale accumulator according to any one of the preceding claims having a bale transfer tray (16) extending between the discharge end of the baler and the inlet end of said passage, the rear end of the tray (16) being pivotally connected about an upright axis (18) to the front end of the discharge device and the front end of the tray (16) being adapted for pivotal connection about an upright axis (19) to the baler to provide a double articulated linkage between baler and accumulator.

6.    A bale accumulator according to any one of the preceding claims wherein the foremost diverter gate (24) is moved between alternate diverter positions, a first position being adopted initially while the bales are diverted thereby to one side of the accumulator, the last bale entering that side acting on a change-over mechanism (44) to move the foremost diverter gate (24) to a second position in which the bales are diverted to the other side of the accumulator, the gate (24) returning to its first position when the set of bales is complete.

7.    A bale accumulator according to claim 6 wherein a return mechanism (59) is provided arranged to be actuated by the completed set of bales to return the foremost diverter gate (24) to its first position in advance of release of said change-over mechanism (44) from engagement with the bales.

8.    A bale accumulator according to claim 7 wherein said return mechanism (59) is connected to a bale release mechanism (50) such that activation of the bale release mechanism (50) to release the set of bales rearwardly disengages the means (49,55) provided in the change-over mechanism (44) for retaining the foremost diverter gate (24) in its second position thereby allowing the gate (24) to return to its first position.

9.    A bale accumulator in which bales are received at the front and discharged at the rear, and in between are diverted, initially by a forward diverter gate (24) to one side or the other of the accumulator, and then by rear diverter gates (28) into different locations in the respective sides of the accumulator, until a complete set of bales is built up across the accumulator whereupon the set is released rearwards by the bale which completes the set acting on a first mechanism (50), the forward diverter gate (24) is moved between alternate diverter positions, a first position being adopted initially while the bales are diverted thereby to one side of the accumulator, the last bale entering that side acting on a second mechanism (44) to move the forward diverter gate (24) to its second position in which the bales are diverted to the other side of the accumulator, the gate (24) returning to its first position when the set of bales is complete in advance of release of said second mechanism (44) from engagement with the bales, under the action of a third mechanism (59) arranged to be actuated by the completed set of bales.

10. A bale accumulator according to claim 9 wherein the third mechanism (59) is connected to the first mechanism (50) such that activation of the first mechanism (50) disengages the means (49,55) provided in the second mechanism (44) for retaining the forward diverter gate (24) in its second position thereby allowing the gate (24) to return to its first position.

FIG.1

FIG.2

FIG.3

FIG.4